(19) Europäisches Patentamt
European Patent Office
Office européen des brevets

(11) **EP 2 509 252 B1**

(12) **FASCICULE DE BREVET EUROPEEN**

(45) Date de publication et mention
de la délivrance du brevet:
**10.08.2016 Bulletin 2016/32**

(51) Int Cl.:
***H04L 9/00*** *(2006.01)*

(21) Numéro de dépôt: **11306360.6**

(22) Date de dépôt: **21.10.2011**

(54) **Procédé de calcul cryptographique sécurisé, en particulier contre des attaques du type DFA et unidirectionnelles, et composant correspondant**

Gesichertes Verschlüsselungsberechnungsverfahren, insbesondere gegen Angriffe vom Typ DFA und unidirektionelle Angriffe, und entsprechende Komponente

Secured cryptographic calculation method, in particular against DFA and one-way attacks, and corresponding component

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2011 FR 1101091**

(43) Date de publication de la demande:
**10.10.2012 Bulletin 2012/41**

(73) Titulaire: **STMicroelectronics (Rousset) SAS 13790 Rousset (FR)**

(72) Inventeurs:
• **Liardet, Pierre-Yvan 13790 PEYNIER (FR)**

• **Romain, Fabrice 83560 RIANS (FR)**

(74) Mandataire: **Dossmann, Gérard Casalonga & Partners Bayerstrasse 71-73 80335 München (DE)**

(56) Documents cités:
**EP-A1- 1 358 732**

• **ABDEL ALIM KAMAL ET AL: "An FPGA implementation of AES with fault analysis countermeasures", MICROELECTRONICS (ICM), 2009 INTERNATIONAL CONFERENCE ON, IEEE, PISCATAWAY, NJ, USA, 19 décembre 2009 (2009-12-19), pages 217-220, XP031631890, ISBN: 978-1-4244-5814-1**

## Description

La présente invention concerne un procédé sécurisé de calcul cryptographique à clé secrète ou privée, mettant en oeuvre notamment mais non exclusivement l'algorithme DES ou AES mais aussi un algorithme de calcul cryptographique présentant la propriété du complément à 1 du DES, comme par exemple les algorithmes à base de « réseau de Feistel ».

Un algorithme dit de « Feistel » effectue un chiffrement symétrique, par blocs, et se caractérise notamment par des opérations de chiffrement et de déchiffrement similaire, voire identiques. Un exemple d'algorithme de Feistel est l'algorithme DES et ses différentes variantes. D'autres algorithmes sont les algorithmes connus sous les noms LOKI et GHOST.

La présente invention concerne également un composant mettant en oeuvre un tel procédé sécurisé.

Les composants concernés par l'invention sont notamment utilisés pour des applications où l'accès aux services et / ou aux données est sévèrement contrôlé. Ces composants ont le plus souvent une architecture formée autour d'un microprocesseur et d'une mémoire de programme comprenant notamment la clé secrète.

De tels composants sont par exemple utilisés dans des cartes à puces, notamment pour des applications de type bancaire, par l'intermédiaire d'un terminal de commande ou à distance.

De tels composants utilisent un ou des procédés de cryptage à clé secrète ou privée pour calculer une donnée de sortie à partir d'une donnée d'entrée. Un tel procédé est par exemple utilisé pour chiffrer, déchiffrer, signer un message d'entrée ou bien vérifier la signature dudit message d'entrée.

Pour assurer la sécurité des transactions, les procédés de cryptage à clé secrète ou privée sont construits de sorte qu'il ne soit pas possible de déterminer la clé secrète utilisée à partir de la connaissance de la donnée d'entrée et / ou de la donnée de sortie de l'algorithme.

Cependant, la sécurité d'un composant repose sur sa capacité à maintenir cachée la clé secrète qu'il utilise.

Un procédé fréquemment utilisé est le procédé de type DES (pour Data Encryption Standard). Il permet par exemple de fournir un message chiffré MS (ou donnée de sortie) codé sur 64 bits, à partir d'un message clair ME (ou donnée d'entrée) également codé sur 64 bits et d'une clé secrète K0 de 56 bits.

L'algorithme de type DES est bien connu de l'homme du métier. Celui-ci pourra se référer par exemple à toutes fins utiles au document intitulé DATA ENCRYPTION STANDARD (DES), FIPS PUB 46-3, FEDERAL INFORMATION PROCESSING STANDARDS PUBLICATION, 25 octobre 1999, U.S. DEPARTMENT OF COMMERCE/National Institute of Standards and Technology.

Différents type d'attaques sur une implémentation (du DES par exemple) d'un algorithme de cryptographie sont possibles.

On peut citer l'attaque du type DFA (« Differential Fault Ananlysis »). Ce type d'attaque a fait l'objet de plusieurs publications. On peut notamment se référer à l'article de Shamir et Biham intitulé "Differential Fault Analysis of Secret Key Cryptosystems", lecture note in computer science, 1294 : pages 513-525, 1997.

L'attaque DFA utilise une injection de faute, par exemple au moyen d'un rayon laser, de façon à atteindre un ou plusieurs bits de résultat temporaire du calcul dans un registre pour en modifier la valeur.

Une attaque DFA utilisant une double injection de fautes permet de contourner une protection par un procédé de calcul cryptographique prévoyant une vérification du calcul par un recalcul et une étape de vérification ou bien un calcul inverse et une étape de vérification.

Une description (sommaire) de ce type d'attaque est la suivante:

1. Repérage des DES successifs (où DES DES$^{-1}$ selon la contre-mesure implémenté) :

Cette étape est faite au moyen d'outils comme la trace en courant ou le rayonnement électromagnétique du composant attaqué.

2. Perturbations, par exemple à l'aide du faisceau laser (à répéter jusqu'à l'obtention de suffisamment de chiffres ou bits fautés pour mener une attaque DFA):

a) Première perturbation sur l'avant dernière ronde du premier DES (ou la deuxième ronde du DES$^{-1}$)
b) Deuxième perturbation sur l'avant dernière ronde du deuxième DES (ou la deuxième ronde du DES$^{-1}$) avec les mêmes caractéristiques de perturbation qu'en a).

3. Exploitation :

L'attaquant mène une attaque DFA avec les messages qu'il a collectés lors de la répétition des perturbations mentionnées au point 2. ci-dessus.

Les perturbations a) et b) doivent induire un même effet afin que la vérification ne puisse pas détecter l'erreur introduite. Il s'agit pour l'attaquant de reproduire exactement deux fois la même erreur à des endroits qui se correspondent dans l'algorithme et dans l'algorithme de vérification.

Un autre type d'attaque par injections de fautes sur un registre ou un élément mémorisant est connu sous le vocable de perturbation unidirectionnelle (« Safe Error Attack »).

La demande de brevet FR N°10/51205 déposée le 19 février 2010 au nom du demandeur décrit une telle attaque et des moyens de protection correspondants.

D'autres moyens de protection contre une telle attaque sont décrits dans la demande de brevet FR N°09/57783 déposée le 4 novembre 2009 ou encore dans la demande de brevet FR N°08/53198 déposée le 16 mai 2008.

De plus, on trouve décrites des contremesures contre de telles attaques dans Kamal et al., "An FPGA Implementation of AES with Fault Analysis Countermeasures", 2009 International Conférence on Microelectronics (ICM), 19 décembre 2009, pages 217-220.

Un autre type d'attaque bien connu de l'homme du métier est une attaque par canal auxiliaire, connu sous le vocable DPA (« Differential Power Analysis »). On peut se référer à l'article de P. Kocher et autres intitulé « Differential Power Analysis ».

Une solution pour se protéger contre une attaque du type DPA consiste à effectuer un masquage aléatoire du chemin de données et en particulier de l'opérateur SBOX présent dans ce chemin de données. Une telle solution est par exemple décrite dans le brevet européen 1358732.

Actuellement il possible pour un attaquant de produire à deux instants précis une même perturbation qui risque de mettre en défaut les contre-mesures décrites dans la demande de brevet FR N°09/57783 ou encore dans la demande de brevet FR N°08/53198.

De plus en dépit du masquage aléatoire de l'opérateur SBOX décrit dans EP 1358732, il est possible pour un attaquant de mener une attaque physique du type DFA (« Differential Fault Ananlysis ») qu'elle utilise une simple ou une double faute.

Selon un mode de mise en oeuvre il est proposé un procédé de calcul cryptographique sécurisé visant à protéger un composant, par exemple incorporé dans une carte à puce, implémentant un calcul cryptographique redondant et une étape de vérification contre une attaque physique du type DFA (« Differential Fault Analysis ») utilisant une double faute visant à fauter les deux calculs et ayant pour objectif d'obtenir des informations sur la clé secrète ou privée.

Selon un autre mode de mise en oeuvre et de réalisation il est proposé de mettre en échec un attaquant qui opèrera en deux instants choisis une perturbation identique, tout en préservant les propriétés de protection contre les attaques en fautes de type « safe error » et également sans compromettre la protection de masquage par une quantité aléatoire nécessaire pour se prémunir de l'analyse des canaux auxiliaires (DPA, DEMA...).

Selon un aspect, il est proposé un procédé de calcul cryptographique sécurisé, comprenant

une élaboration d'une première liste de premières quantités aléatoires, une élaboration d'un premier opérateur non linéaire de substitution (par exemple un opérateur SBOX) masqué à l'aide d'une partie au moins de ladite première liste, une élaboration d'une deuxième liste déduite de ladite première liste et comportant des deuxièmes quantités aléatoires respectivement déduites desdites premières quantités aléatoires,

une élaboration d'un deuxième opérateur non linéaire de substitution masqué à l'aide d'une partie au moins de ladite deuxième liste, au moins deux mises en oeuvre successives d'un algorithme de calcul cryptographique comportant N rondes de calcul réalisées successivement pour obtenir une donnée de sortie à partir d'une donnée d'entrée et d'une clé secrète, par exemple un algorithme préférentiellement symétrique, de chiffrement ou de déchiffrement, par exemple le DES, l'AES ou une de leurs variantes, le chemin de données de l'algorithme étant masqué, l'une des deux mises en oeuvre comportant un masquage du chemin de données de l'algorithme faisant intervenir la première liste de premières quantités aléatoires et ledit premier opérateur non linéaire de substitution masqué,

l'autre mise en oeuvre comportant un masquage du chemin de données de l'algorithme faisant intervenir la deuxième liste de deuxièmes quantités aléatoires et ledit deuxième opérateur non linéaire de substitution masqué, et après les deux mises en oeuvre de l'algorithme,

une vérification de la cohérence entre les deux mises en oeuvre ou exécutions comme par exemple, une vérification de l'égalité entre deux données prises parmi les données impliquées dans les deux mises en oeuvre.

Ces données impliquées peuvent être les données d'entrées et les données de sortie des deux mises en oeuvre.

Le choix des données à vérifier dépend si la mise en oeuvre de l'algorithme est un chiffrement ou un déchiffrement.

Ainsi si on applique l'algorithme sur une donnée d'entrée en clair on obtiendra une donnée de sortie chiffrée. Si on applique l'algorithme sur une donnée d'entrée chiffrée on obtiendra une donnée de sortie en clair.

On peut ainsi effectuer les deux mises en oeuvre en utilisant deux fois la même donnée d'entrée en clair. Ainsi par exemple on met en oeuvre deux fois le DES. Dans ce cas l'étape de vérification mentionnée plus haut comprend la vérification de l'égalité entre les deux données de sortie chiffrées (cryptées).

On peut aussi effectuer une première mise en oeuvre avec une donnée d'entrée en clair et la deuxième mise en oeuvre avec comme donnée d'entrée, la donnée de sortie chiffrée obtenue après la première mise en oeuvre. Ainsi par exemple on met en oeuvre la première fois le DES puis le DES$^{-1}$. Dans ce cas l'étape de vérification mentionnée plus haut comprend la vérification de l'égalité entre la donnée d'entrée (en clair) utilisée lors de la première mise en oeuvre et la donnée de sortie (en clair : déchiffrée) obtenue à l'issue de la deuxième mise en oeuvre.

On peut aussi effectuer une première mise en oeuvre avec une donnée d'entrée chiffrée et la deuxième mise en oeuvre avec comme donnée d'entrée, la donnée de sortie en clair (déchiffrée) obtenue après la première mise en oeuvre. Ainsi par exemple on met en oeuvre la première fois le DES$^{-1}$ puis le DES. Dans ce cas l'étape de vérification mentionnée plus haut comprend la vérification de l'égalité entre la donnée d'entrée (chiffrée) utilisée lors de la première mise en oeuvre et la donnée de sortie (chiffrée) obtenue à l'issue de la deuxième mise en oeuvre.

Il est ainsi possible de se prémunir d'une attaque DFA utilisant une double faute.

Les deuxièmes quantités aléatoires peuvent être déduites des première quantités aléatoires de différentes manières, par exemple par une opération de complément à 1, par une incrémentation de 1 ou encore en effectuant un OU EXCLUSIF (XOR) de chaque première quantité aléatoire avec une constante, ces exemples n'étant pas exhaustifs.

Selon un autre aspect, l'invention peut aussi s'entendre comme un procédé de protection au sein d'un circuit électronique, d'une information, par exemple une clé, dans un algorithme, préférentiellement symétrique, de chiffrement ou de déchiffrement d'un message (donnée d'entrée), mis en oeuvre au sein d'un composant électronique, comprenant une élaboration d'une première liste de premières quantités aléatoires, une élaboration d'un premier opérateur non linéaire de substitution masqué à l'aide d'une partie au moins de ladite première liste,
une élaboration d'une deuxième liste déduite de ladite première liste et comportant des deuxièmes quantités aléatoires respectivement déduites desdites premières quantités aléatoires, une élaboration d'un deuxième opérateur non linéaire de substitution masqué à l'aide d'une partie au moins de ladite deuxième liste,
au moins deux mises en oeuvre successives dudit algorithme, le chemin de données de l'algorithme étant masqué, l'une des deux mises en oeuvre comportant un masquage du chemin de données de l'algorithme faisant intervenir la première liste de premières quantités aléatoires et ledit premier opérateur non linéaire de substitution masqué, l'autre mise en oeuvre comportant un masquage du chemin de données de l'algorithme faisant intervenir la deuxième liste de deuxièmes quantités aléatoires et ledit deuxième opérateur non linéaire de substitution masqué,
et après les deux mises en oeuvre de l'algorithme, une vérification de la cohérence entre les deux mises en oeuvre ou exécutions, comme par exemple une vérification de l'égalité entre deux données prises parmi les données impliquées dans les deux mises en oeuvre.

Selon un mode de mise en oeuvre compatible avec un algorithme de calcul cryptographique (de chiffrement ou de déchiffrement) présentant la propriété du complément à 1 du DES, comme par exemple l'algorithme triple DES ou encore les algorithmes à base de « réseau de Feistel », le procédé comprend en outre
un tirage aléatoire d'au moins un premier bit,
un masquage initial de la donnée d'entrée à l'aide dudit premier bit de façon à obtenir une donnée d'entrée masquée,
un masquage de la clé à l'aide dudit premier bit de façon à obtenir une clé masquée,
une première mise en oeuvre de l'algorithme faisant intervenir ladite donnée d'entrée masquée et ladite clé masquée ainsi que l'une des deux listes de quantités aléatoires et l'opérateur non linéaire de substitution masqué correspondant,
une deuxième mise en oeuvre de l'algorithme faisant intervenir ladite donnée d'entrée masquée et ladite clé masquée ainsi que l'autre liste de quantités aléatoires et l'autre opérateur non linéaire de substitution masqué, et
ladite étape de vérification de la cohérence entre les deux mises en oeuvre ou exécutions, vérification effectuée par exemple sur deux données prises parmi les données impliquées dans les deux mises en oeuvre, ces données pouvant être des données masquées par ledit premier bit ou bien démasquées par ledit premier bit.

Un tel mode de mise en oeuvre permet une protection simultanée contre plusieurs attaques.

Le choix dans les deux mises en oeuvre, de l'une ou l'autre des deux listes et de l'opérateur de substitution masqué correspondant peut dépendre de la valeur d'un deuxième bit tiré aléatoirement.

Par exemple un attaquant ne sera plus capable de perturber de manière précise et répétitive (avec les mêmes effets sur les registres ou la logique interne du circuit attaqué) les deux instances algorithmiques redondantes (par exemple : DES-DES ; DES-DES$^{-1}$ , DES$^{-1}$-DES) mises en oeuvre dans la protection, afin d'obtenir des données fautées (malgré la vérification effectuée) exploitable dans le cadre de la DFA. Il ne sera pas non plus possible à cet attaquant d'appliquer une « safe-error » sur les bits des registres de clé.

Selon un autre aspect il est proposé un composant ou circuit électronique comprenant des moyens adaptés pour mettre en oeuvre le procédé de calcul cryptographique ou de protection tel que défini ci-avant.

Selon un autre aspect il est proposé une carte à puce, incorporant un tel composant ou circuit électronique.

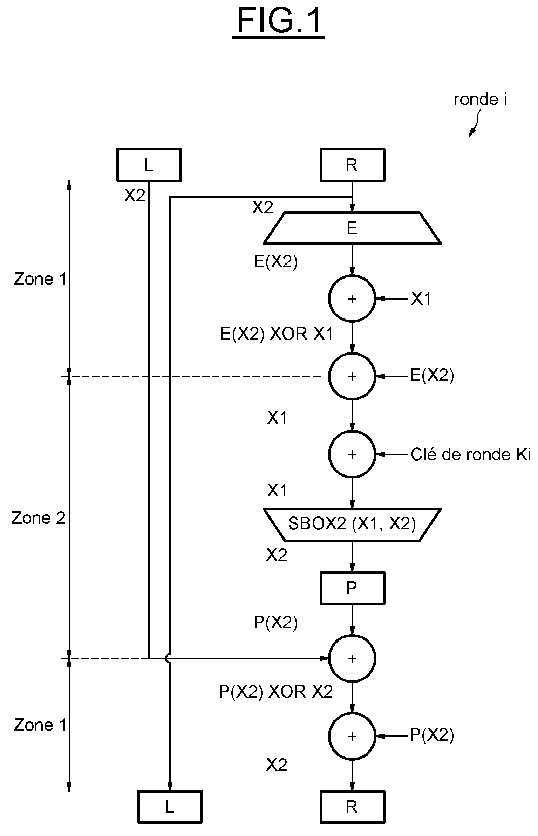

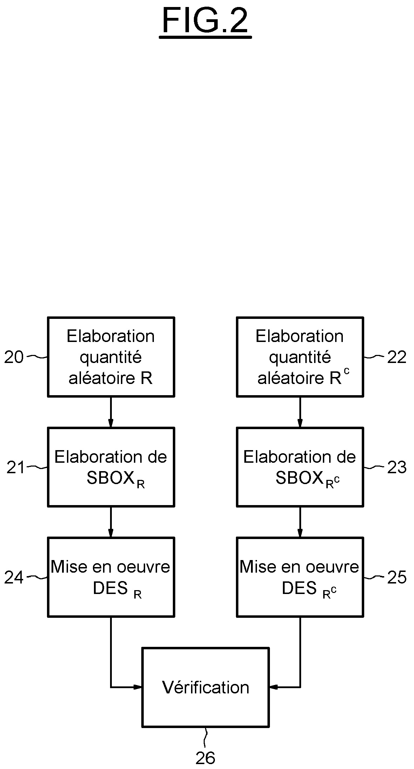

D'autres avantages et caractéristiques de l'invention apparaitront à l'examen de modes de mise en oeuvre et de réalisation, non limitatifs, et des dessins annexés sur lesquels la figure 1 illustre schématiquement un exemple de chemin de données masqué d'une ronde de rang i d'un algorithme du type DES et les figures 2 à 5 sont relatives à différents modes de mises en oeuvre et de réalisation d'un procédé et d'un composant selon l'invention.

Sur la figure 1 le chemin de données est ici masqué par deux nombres aléatoires X1, X2. E et P sont respectivement une expansion et une permutation couramment utilisées dans un algorithme DES connu. XOR désigne la fonction OU EXCLUSIF.

Un nouvel opérateur non linéaire SBOX2 est calculé par la relation : SBOX2 = FCT(SBOX, X1, X2) où SBOX est l'opérateur non linéaire utilisé dans un procédé DES connu, et FCT est une fonction telle que : SBOX2 (A XOR X1)=SBOX(A) XOR X2 pour tout A.

Cela étant, bien que la figue 1 soit relative à l'opérateur XOR, celui-ci n'est pas le seul opérateur possible, et la fonction FCT peut être telle que : SBOX2 (A@X1)=SBOX(A)#X2 pour tout A, dans laquelle "@ ", " # " sont des opérateurs de mélange linéaires. " @ ", " # " peuvent être différents l'un de l'autre. Ces opérateurs peuvent avoir notamment les propriétés décrites dans EP 1358732.

Plus précisément si l'on prend par exemple l'opérateur @, il est choisi linéaire par rapport aux variables qu'il mélange et présente de manière générale les propriétés suivantes, quelles que soient les données A, B, C :

@ est d'arité deux : il prend deux arguments en paramètres,
@ vérifie : E(A@B)=E(A)@E(B), E étant un opérateur linéaire,
@ vérifie (A XOR B)@C=A XOR (B@C)

Il existe un opérateur $@^{-1}$ inverse de @, tel que (A@B)$@^{-1}$A=B @ et $@^{-1}$ peuvent être éventuellement identiques.

Tout autre masquage aléatoire du chemin de données est possible notamment celui décrit dans EP1358732.

Une perturbation non détectée par les procédés décrits dans la demande de brevet FR N°09/57783 ou encore dans la demande de brevet FR N°08/53198 est une perturbation opérée dans la zone 2 représentée sur la figure 1 qui profite de la caractéristique que les masques relatifs aux bits du flot affectés par la faute sont identiques (en considérant un seul bit la probabilité d'un tel évènement est de ½, en considérant d'avantages de bits l'attaquant aura une bonne probabilité d'obtenir des instances favorables avec suffisamment d'essais). En d'autres termes dans cette zone 2, les données sont identiques lors des deux instances algorithmiques redondantes.

La probabilité de succès de l'attaquant dépend surtout de sa capacité à reproduire la perturbation au même moment (où a un moment amenant le même effet).

Selon un aspect de l'invention il est proposé notamment un procédé pour lequel l'attaquant qui procède à une double injection de fautes sur un composant implémentant deux instances algorithmiques redondantes (par exemple DES DES, ou DES DES$^{-1}$, ou DES$^{-1}$ DES) ne pourra plus obtenir de perturbations non détectées et exploitables pour une attaque DFA.

Comme on va le voir plus en détails ci-après, cet aspect de l'invention se distingue d'une première solution consistant en une multiplication des instances de DES afin de réduire la probabilité de l'attaquant de produire une multitude de fautes identiques, ou en un choix d'un nombre aléatoire d'instances (de mises en oeuvre du DES).

Cet aspect de l'invention se distingue également d'une deuxième solution prévoyant d'utiliser la protection par masquage aléatoire en renouvelant les quantités aléatoires entre les deux instances de DES.

Le gros inconvénient de la première solution est d'une part que la performance sera particulièrement dégradée, et d'autre part que la contre-mesure n'empêche pas l'attaquant de faire l'attaque mais la rend plus difficile sans pouvoir mesurer l'échelle de difficulté.

La deuxième solution quant à elle ne fait que réduire très faiblement la probabilité de l'attaquant d'obtenir des couples dans l'étape 2 (perturbations) de la description sommaire d'une attaque DFA double faute mentionnée ci-avant.

Au contraire avec cet aspect de l'invention la protection est « totale ».

Plus précisément de façon à se prémunir contre une attaque DFA double faute, il est prévu selon un mode de mise en oeuvre (figure 2) :

- une élaboration 20 d'une première liste de premières quantités aléatoires R (les nombres aléatoires X1, X2 de la figure 1, ou bien les nombres aléatoires X1, X2, X3 utilisés dans EP 1358732 sont par exemples les premières quantités aléatoires de la liste R)

- une élaboration 21 d'un premier opérateur non linéaire de substitution SBOX$_R$ masqué à l'aide d'une partie au moins de ladite première liste,

- une élaboration 22 d'une deuxième liste R$^C$ complément de ladite première liste et comportant des deuxièmes quantités aléatoires respectivement par exemple compléments à 1 desdites premières quantités aléatoires, (comme indiqué ci-avant le complément à 1 n'est pas la seule possibilité pour déduire les deuxième quantités aléatoires des premières ; on peut en effet notamment effectuer une incrémentation de 1 ou encore un OU EXCLUSIF (XOR) de chaque première quantité aléatoire avec une constante)

- une élaboration 23 d'un deuxième opérateur non linéaire de substitution SBOX R$^C$ masqué à l'aide d'une partie au moins de ladite deuxième liste,

- au moins deux mises en oeuvre successives de l'algorithme DES à chemin de données masqué par exemple selon la figure 1 ou selon EP 1358732, l'une des deux mises en oeuvre 24 (DES$_R$) comportant un masquage du chemin de données de l'algorithme faisant intervenir la première liste de premières quantités aléatoires R et ledit premier opérateur non linéaire de substitution masqué SBOX$_R$ ,

l'autre mise en oeuvre 25 (DES R$^C$) comportant un masquage du chemin de données de l'algorithme faisant intervenir la deuxième liste de deuxièmes quantités aléatoires R$^C$ et ledit deuxième opérateur non linéaire de substitution masqué SBOX R$^C$, et

- une vérification (26) de l'égalité entre ici les deux données de sortie respectivement obtenues à l'issue des deux mises en oeuvre de l'algorithme. (On a supposé en effet ici que l'on faisait deux instances de chiffrement (DES-DES) sur une même donnée d'entrée en clair).

Une non égalité entre les deux données signifie que le composant a subi une perturbation. Dans ce cas des mesures telles qu'un blocage fonctionnel du composant peuvent être prises.

On va maintenant décrire un exemple de protocole conforme à ce mode de mise en oeuvre.

Le masquage aléatoire du flot de données d'une implémentation DES permet de protéger le DES contre les attaques de type DPA ou DEMA.

Plus précisément, avec ce masquage aléatoire

$$C=DES_R(M,K,R,\ SBOX_R)$$

où par exemple, $M$ désigne un message de 64 bits (donnée d'entrée), $K$ une clé de 56 bit encodée sur 64 bits, $R$ la liste de premières quantités aléatoires, $C$ le résultat du chiffrement du message $M$ avec la clé $K$ et $DES_R$ désigne une implémentation du DES réalisée selon un procédé de masquage tel que celui illustré sur la figure 1 ou bien décrit dans EP 1358732, faisant intervenir des quantités aléatoires de la liste $R$ (généralement deux quantités de taille 32 et 48 bits) et une opération de substitution $SBOX_R$ (généralement une table de 256 octets) réalisée conformément auxdites quantités de la liste $R$.

Ce masquage est tel que si les quantités de la liste $R$ (et par conséquent $SBOX_R$) sont changées à chaque appel à $DES_R$ l'implémentation obtenue n'est pas vulnérable aux attaques de type DPA car la totalité du flot est masqué par les quantités aléatoires choisies par des procédés internes, ces quantités étant non connues de l'attaquant. Cependant comme indiqué ci-avant, à elle seule cette implémentation est vulnérable à une attaque DFA.

Dans la suite les notations suivantes sont utilisées :

Notations :

- 0xNN désigne la notation hexadécimale avec 0<N<F (par exemple 128 s'écrit 0x80)
- R désigne la liste de quantités aléatoires $r_i$ nécessaire pour réaliser DES$_R$.
- Lorsque $a$ désigne un bit $a'$ désigne le complément à 1 de $a$ *(si a vaut 0 le complément à 1 vaut 1 et inversement)*
- Etant donné une liste $R$ la notation $R^C$ désigne la liste complément c'est-à-dire telle que pour chaque $r_i$ dans R et chaque $r_i^c$ dans R$^c$ on a $r_i^c$ ^ $r_i$=0xFF...FF.
  $r_i^c$ est donc ici le complément à 1 de $r_i$.

Par exemple on pourra construire $R$ et $R^c$ à partir d'une liste A de nombres aléatoires $a_i$ en prenant pour R la liste des $r_i = a_i$ et respectivement pour $R^c$ la liste des $r_i^c = a_i$ ^0xFF...FF.

^ désigne la fonction XOR bit à bit.

On choisira de préférence $r_i$ différent de 0 et de FF.

Les nombres aléatoires X1, X2 de la figure 1, ou bien les nombres aléatoires X1, X2, X3 utilisés dans EP 1358732 sont par exemple les quantités aléatoires $r_i$ de la liste R.

- Avec les notations précédentes $DES_R{}^c$ désigne une implémentation du DES réalisée selon un procédé de masquage tel qu'illustré sur la figure 1 ou bien tel que décrit dans EP 1358732 faisant intervenir une liste de quantités aléatoires $R^c$, alors $DES_R$ désigne cette même implémentation du DES faisant intervenir la liste de quantités aléatoires $R$.
- Ainsi $SBOX_R{}^c$ *désigné les SBOX* masquées selon la liste $R^c$ lorsque $SBOX_R$ désigne les *SBOX* masquées selon la liste $R$.

Le protocole est le suivant :

1. Tirage aléatoire de la liste A de nombres aléatoires $a_i$

2. Construire $R$ et $R^c$ à partir de $A$

3. Calcul de $SBOX_R$

4. Calcul de $SBOX_R{}^c$

5. Vérifier que $DES_R{}^c == DES_R$ c'est-à-dire vérifier que les deux données de sorties respectivement obtenues par la mise en oeuvre de $DES_R{}^c$ et par la mise en oeuvre de $DES_R$ sont égales.

En variante il serait possible d'inverser l'ordre des étapes 3 et 4 ou de choisir cet ordre en fonction d'un tirage aléatoire.

En variante le calcul de $SBOX_R$ (resp de $SBOX_R{}^c$) peut être fait lors de l'exécution de $DES_R$ (resp $DES_R{}^C$).

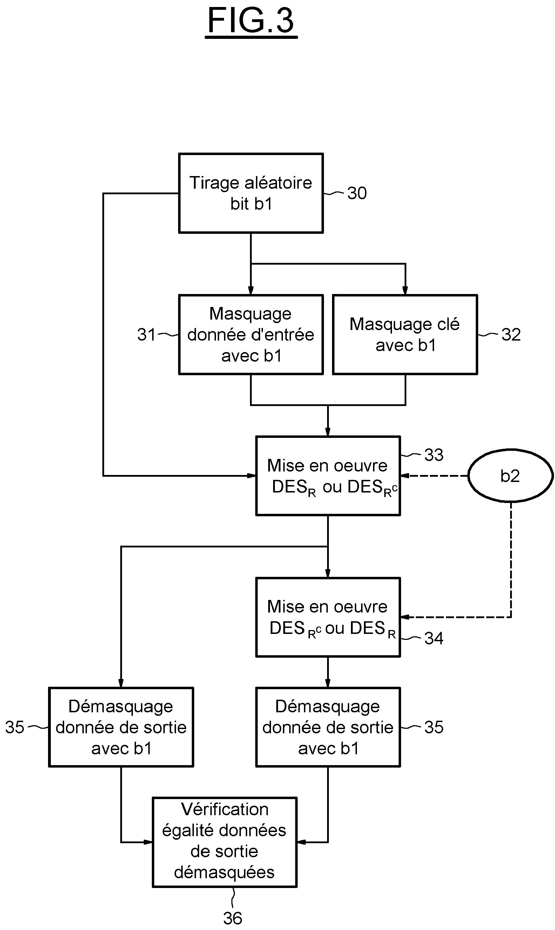

De façon à se prémunir à la fois contre une attaque DFA double faute et en particulier contre un attaque du type « safe error », il est prévu selon un autre mode de mise en oeuvre illustré sur la figure 3 que le procédé comprenne en outre

- un tirage aléatoire 30 d'au moins un premier bit b1,
  un masquage initial 31 de la donnée d'entrée à l'aide dudit bit b1 de façon à obtenir une donnée d'entrée masquée (complémentée à b1),
- un masquage 32 de la clé à l'aide dudit bit b1 de façon à obtenir une clé masquée (complémentée à b1 ; si b1=0 la clé masquée est la clé initiale et si b1=1 la clé masquée est complémentée à 1),
- une première mise en oeuvre 33 de l'algorithme ($DES_R$ ou $DES_R{}^c$) faisant intervenir l'une des deux listes de quantités aléatoires et l'opérateur non linéaire de substitution masqué correspondant,
- une deuxième mise en oeuvre 34 de l'algorithme ($DES_R{}^c$ ou $DES_R$) faisant intervenir l'autre liste de quantités aléatoires et l'autre opérateur non linéaire de substitution masqué,
- un démasquage 35 de chaque donnée de sortie avec ledit premier bit b1 et une vérification 36 sur les deux données de sortie démasquées.

Cela étant la vérification pourrait s'effectuer sur les données non démasquées.

On a également supposé ici que l'on faisait deux instances de chiffrement (DES-DES) sur une même donnée d'entrée.

Cet autre mode de mise en oeuvre utilise une deuxième propriété qui est une propriété du DES relative au complément à 1.

Plus précisément si C = DES(M,K), alors C' = DES(M',K') où C' désigne le complément à 1 de C et on peut alors retrouver C par la formule C=(DES(M',K'))', où pour tout X sur 64 bits, X'=0xFFFFFFFFFFFFFFFF^X

^ désignant le XOR (OU EXCLUSIF) bit à bit,

M désignant le message, et K la clé DES codée sur 64 bits.

Cet autre mode de mise en oeuvre tire partie des deux propriétés précédentes afin de mettre en échec un attaquant qui opèrera en deux instants choisis une perturbation identique, tout en préservant les propriétés de protection contre les attaques en fautes de type « safe error » et également sans compromettre la protection de masquage par une quantité aléatoire nécessaire pour se prémunir de l'analyse des canaux auxiliaires (DPA, DEMA...).

On va maintenant décrire un exemple de protocole conforme à cet autre mode de mise en oeuvre, utilisant en outre un deuxième bit b2 (figure 3) qui va permettre de choisir l'alternance d'utilisation de $DES_R$ et $DES_R{}^c$.

Les notations ci-dessus sont complétées par les notations suivantes :

Notations :

- Mask[0]=Ox0000000000000000 et Mask[1]=0xFFFFFFFFFFFFFFFF.
- KEY est le registre de clé de l'implémentation $DES_R$ (KEY est représenté sur 64 bits),
- RDATA le registre de donnée en entrée et en sortie de la cellule qui réalise $DES_R$
- TEMP est un registre ou mémoire.

Le protocole est le suivant :

1. Tirage aléatoire de deux bits bit *b1 et b2 b1* sert à complémenter le message et la clé *b2* sert comme indiqué ci-avant à alterner l'utilisation de $DES_R$ et $DES_R{}^c$

2. Tirage aléatoire de la liste A de nombres aléatoires $a_i$

3. Construire $R$ et $R^c$ à partir de $A$

4. Calcul de $SBOX_R$

5. Calcul de $SBOX_R{}^c$

6. Calcul de $M[b1]=M$ ^Mask[$b1$]

7. Calcul de $K[b1]=K$^ Mask[$b1$]

8. Chargement de *KEY* avec $K[b1]$

9. Faire la séquence *Sequence*($b1,b2$) *C[1] = TEMP*

10. Faire la séquence *Sequence*($b1,b2'$) *C[2] = TEMP*

11. Vérification *C[1] == C[2]*

12. Calcul de *C[1]* = C*[2]*^Mask[$b1$]

Dans ce qui précède *Sequence(b1_param, b2_param)* appliquée aux paramètres *b1_param* et *b2_param* pour calculer le contenu de TEMP est définie par:

a. Chargement de *M[b1_param]* dans RDATA

b. Si *b2_param* = 1 alors exécution de $DES_R{}^c$ sinon exécution de $DES_R$

c. Déchargement RDATA en *TEMP*

Il convient de remarquer que le fait que la clé soit représentée sur 64 bits alors qu'elle n'en comporte que 56 est tout a fait classique et permet de ne pas distinguer le masque sur la clé et le masque sur la donnée.

En variante le calcul de $SBOX_R$ (resp de $SBOX_R{}^c$) peut être fait en 9 et 10 lors de l'exécution de $DES_R$ (resp $DES_R{}^C$).

Par ailleurs comme indiqué ci-avant, alors que la vérification s'effectue dans le protocole ci-dessus sur les données C masquées par le bit b1 (complémentées à b1), elle pourrait aussi s'effectuer, après démasquage par le bit b1 de données masquées, sur ces données démasquées.

Il convient de noter que pour que l'attaquant ne puisse pas distinguer un masquage avec b1 = 0 d'un masquage avec b1 = 1 , les étapes 6 et 7 sont avantageusement agencées de façon à ce que l'attaquant ne puisse pas distinguer l'exécution avec $b$1=0 de celle avec $b$1=1.

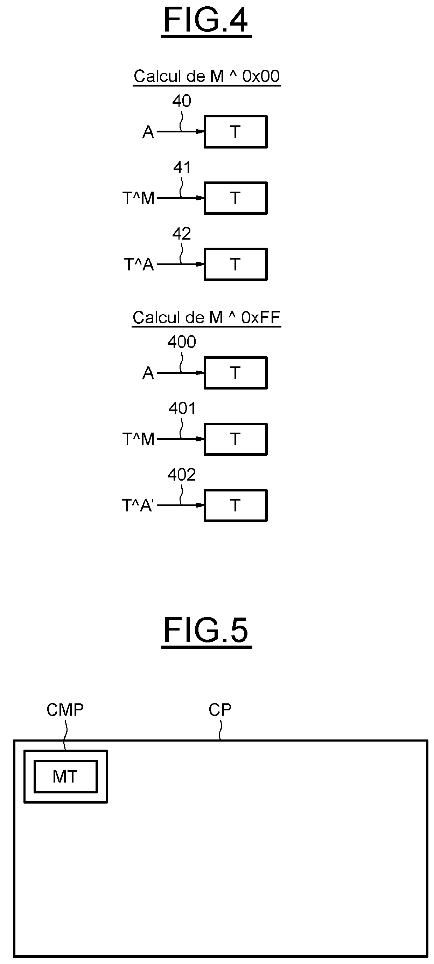

A cet égard on pourra utiliser tout moyen connu comme par exemple une implémentation du type de celle illustrée sur la figure 4.

Sur cette figure A est un octet aléatoire et A' est son complément à 1.

Calcul de M^0x00

On stocke A dans un registre T (étape 40).

On stocke T^M dans T (on effectue donc A^M) (étape 41).

On stocke T^A dans T (on effectue donc A^M^A qui est égal à M) (étape 42).

M est donc stocké dans T.

Calcul de M^0xFF

On stocke A dans T (étape 400).

On stocke T^M dans T (on effectue donc A^M) (étape 401).

On stocke T^A' dans T (on effectue donc A^M^A' qui est égal à A^M^A^0xFF qui est égal à M^0.xFF) (étape 402).

M^0xFF est donc stocké dans T.

Ainsi les deux calculs de M^0x00 et M^0xFF comportent chacun sensiblement le même nombre des transitions de bits ce qui permet très difficilement de les discerner.

Par ailleurs lors de l'étape b dans *Sequence(b1_param, b2_param)* ci-dessus le calcul est opéré avec une fois avec $SBOX_R{}^c$ (donc masquées selon $R^c$) et une autre fois avec $SBOX_R$ (donc masquées selon R) alors que les données et clés sont masquées initialement selon le même masque Mask[$b1$].

En tenant compte par exemple de l'implémentation décrite dans EP 1358732 ou bien de celle illustrée sur la figure 1:

Lorsque *b1*=1, l'exécution du $DES_R{}^c$ est en zone 1 (cf Figure 1) selon un masquage correspondant à Mask[1]^$R^c$ = *R et* en zone 2 (cf Figure 1) selon un masque correspondant à $R^c$. L'exécution du $DES_R$ est en zone 1 (cf Figure 1) selon un masquage correspondant à Mask[1]^$R$ = $R^c$ *et* en zone 2 (cf Figure 1) selon un masque correspondant à R.

Inversement, lorsque *b1 = 0*, l'exécution du $DES_R$ est en zone 1 (cf Figure 1) selon un masquage correspondant à *Mask*[0]^$R=R$ *et* en zone 2 (cf Figure 1) selon un masque correspondant à Mask[0]^$R=R$. L'exécution du $DES_R{}^c$ est en zone 1 (cf Figure 1) selon un masquage correspondant à Mask[0]^ $R^c$ = $R^c$ *et* en zone 2 (cf Figure 1) selon un masque correspondant à $R^c$.

Les deux tables suivantes précisent les masquages obtenus lors de l'exécution du protocole selon *b1* :

Table 1 : Cas *b1*= 0

| Opération | Masquage en Zone1 | Masquage en Zone2 |
|---|---|---|
| $DES_R$ (b2=0) | $R$ | $R$ |
| $DES_{R^c}$ (b2=1) | $R^c$ | $R^c$ |

Table *2 :* Cas *b1* = 1

| Opération | Masquage en Zone1 | Masquage en Zone2 |
|---|---|---|
| $DES_R$ (b2=0) | $R^c$ | $R$ |
| $DES_{R^c}$ (b2=1) | $R$ | $R^c$ |

Ainsi l'attaquant ne pourra pas obtenir une perturbation non détectée par la vérification du point 11 du protocole, et le composant bénéficie également d'une protection contre les « safe-error » car la propriété de représentation alternative de la clé est respectée.

En effet, toute modification dans la logique qui résultera d'une perturbation lors de la première instance du DES et qui modifiera la donnée masquée selon le premier masque choisi aléatoirement, ne pourra pas avec un effet identique lors de la deuxième instance du DES modifier de la même manière la donnée masqué par le masque complémentaire.

Lorsque l'attaquant applique son attaque à un composant mettant en oeuvre un procédé selon l'invention, celui ci va obtenir une détection de faute qui dépend soit de la séquence exécuté si la perturbation a lieu en zone 1 (et non pas de la clé utilisée), soit une une détection systématique si la perturbation est située en zone 2. Grâce à ces effets l'attaquant qui procède à une attaque du type « safe error » va obtenir des fautes détectées et non détectées indépendamment des bits de clé ce qui ne lui permet pas de déduire d'information sur les k-bits de clé ciblés.

Il est à noter que la protection peut aussi être mise en oeuvre avec plusieurs registres de clé.

Le procédé selon l'invention peut être mis en oeuvre de façon logicielle au sein d'un composant CMP ou circuit électronique comportant des moyens de traitement MT (figure 5) réalisés par exemple par un ou plusieurs modules logiciel implémentés au sein d'un microprocesseur.

A cet égard, selon un autre aspect de l'invention il est proposé un produit programme d'ordinateur chargeable directement dans une mémoire d'un système informatique, par exemple le processeur et ses mémoires associées, comprenant des portions de code de logiciel pour l'exécution du procédé tel que défini ci-avant lorsque ledit programme est exécuté sur ledit système informatique.

Il est également proposé un support lisible par un système informatique, ayant des instructions exécutables par ordinateur adaptées pour provoquer l'exécution par le système informatique du procédé tel que défini ci-avant.

Le circuit électronique peut être incorporé dans une carte à puce ou à microcircuit CP.

**Revendications**

1. Procédé de calcul cryptographique sécurisé, comprenant une élaboration (20) d'une première liste de premières quantités aléatoires, une élaboration (21) d'un premier opérateur non linéaire de substitution masqué à l'aide d'une partie au moins de ladite première liste, une élaboration (22) d'une deuxième liste déduite de ladite première liste et comportant des deuxièmes quantités aléatoires respectivement déduites desdites premières quantités aléatoires, une élaboration (23) d'un deuxième opérateur non linéaire de substitution masqué à l'aide d'une partie au moins de ladite deuxième liste, au moins deux mises en oeuvre successives d'un algorithme de calcul cryptographique comportant N rondes de calcul réalisées successivement pour obtenir une donnée de sortie à partir d'une donnée d'entrée et d'une clé secrète, le chemin de données de l'algorithme étant masqué, l'une des deux mises en oeuvre (24) comportant un masquage du chemin de données de l'algorithme faisant intervenir la première liste de premières quantités aléatoires et ledit premier opérateur non linéaire de substitution masqué, l'autre mise en oeuvre (25) comportant un masquage du chemin de données de l'algorithme faisant intervenir la deuxième liste de deuxièmes quantités aléatoires et ledit deuxième opérateur non linéaire de substitution masqué, et après les deux mises en oeuvre de l'algorithme, une vérification (26) de la cohérence entre les deux mises en oeuvre ou exécutions.

2.  Procédé selon la revendication 1, dans lequel la vérification (26) de ladite cohérence comprend une vérification de l'égalité entre deux données prises parmi les données impliquées dans les deux mises en oeuvre.

3.  Procédé selon la revendication 1 ou 2, dans lequel les deuxièmes quantités aléatoires sont obtenues en complémentant à 1 les premières quantités aléatoires.

4.  Procédé selon l'une des revendications précédentes, comprenant en outre un tirage aléatoire (30) d'au moins un premier bit (b1), un masquage initial (31) de la donnée d'entrée à l'aide dudit premier bit de façon à obtenir une donnée d'entrée masquée, un masquage (32) de la clé à l'aide dudit premier bit de façon à obtenir une clé masquée, une première mise en oeuvre de l'algorithme (33) faisant intervenir ladite donnée d'entrée masquée et ladite clé masquée ainsi que l'une des deux listes de quantités aléatoires et l'opérateur non linéaire de substitution masqué correspondant , une deuxième mise en oeuvre de l'algorithme (34) faisant intervenir ladite donnée d'entrée masquée et ladite clé masquée ainsi que l'autre liste de quantités aléatoires et l'autre opérateur non linéaire de substitution masqué, et ladite étape de vérification (36) de cohérence effectuée par exemple sur deux données prises parmi les données impliquées dans les deux mises en oeuvre, ces données pouvant être des données masquées par ledit premier bit ou bien démasquées (35) par ledit premier bit.

5.  Procédé selon la revendication 4, dans lequel le choix de l'une ou l'autre des deux listes et de l'opérateur de substitution masqué correspondant dans les deux mises en oeuvre dépend de la valeur d'un deuxième bit (b2) tiré aléatoirement.

6.  Composant électronique, **caractérisé en ce qu'**il comprend des moyens (MT) adaptés pour mettre en oeuvre le procédé de calcul cryptographique selon l'une des revendications précédentes.

7.  Carte à puce, incorporant un composant (CMP) selon la revendication 6.

8.  Produit programme d'ordinateur chargeable directement dans une mémoire d'un système informatique, comprenant des portions de code de logiciel pour l'exécution du procédé selon l'une des revendications 1 à 5, lorsque ledit programme est exécuté sur ledit système informatique.

9.  Support lisible par un système informatique, ayant des instructions exécutables par ordinateur adaptées pour provoquer l'exécution par le système informatique du procédé selon l'une des revendications 1 à 5.

**Patentansprüche**

1.  Gesichertes kryptographisches Berechnungsverfahren, das Folgendes umfasst:

    Verarbeiten (20) einer ersten Liste erster Zufallsgrößen, Verarbeiten (21) eines ersten nichtlinearen Substitutionsoperators, der mit Hilfe wenigstens eines Teils der ersten Liste maskiert ist, Verarbeiten (22) einer zweiten Liste, die aus der ersten Liste abgeleitet ist und zweite Zufallsgrößen enthält, die jeweils aus den ersten Zufallsgrößen abgeleitet sind, Verarbeiten (23) eines zweiten nichtlinearen Substitutionsoperators, der mit Hilfe wenigstens eines Teils der zweiten Liste maskiert ist, wenigstens zwei aufeinanderfolgende Ausführungen eines Algorithmus einer kryptographischen Berechnung, die N Berechnungsdurchläufe enthalten, die nacheinander ausgeführt werden, um eine Ausgangsdateneinheit anhand einer Eingangsdateneinheit und eines geheimen Schlüssels zu erhalten, wobei der Datenpfad des Algorithmus maskiert ist, eine der zwei Ausführungen (24) eine Maskierung des Datenpfades des Algorithmus umfasst, die die erste Liste erster Zufallsgrößen und den ersten maskierten nichtlinearen Substitutionsoperator verwendet und die andere Ausführung (25) eine Maskierung des Datenpfades des Algorithmus umfasst, die die zweite Liste zweiter Zufallsgrößen und den zweiten maskierten nichtlinearen Substitutionsoperator verwendet, und nach den zwei Ausführungen des Algorithmus Verifizieren (26) der Kohärenz zwischen den beiden Ausführungen oder Abarbeitungen.

2.  Verfahren nach Anspruch 1, wobei das Verifizieren (26) der Kohärenz ein Verifizieren der Gleichheit zwischen zwei Dateneinheiten, die aus den Daten, die an den zwei Ausführungen beteiligt sind, entnommen werden, umfasst.

3.  Verfahren nach Anspruch 1 oder 2, wobei die zweiten Zufallsgrößen durch Bilden des Einerkomplements der ersten Zufallsgrößen erhalten werden.

**4.** Verfahren nach einem der vorhergehenden Ansprüche, das außerdem Folgendes umfasst: eine Zufallsziehung (30) wenigstens eines ersten Bit (b1), eine anfängliche Maskierung (31) der Eingangsdateneinheit mit Hilfe des ersten Bit, derart, dass eine maskierte Eingangsdateneinheit erhalten wird, eine Maskierung (32) des Schlüssels mit Hilfe des ersten Bit, derart, dass ein maskierter Schlüssel erhalten wird, eine erste Ausführung (33) des Algorithmus, die die maskierte Eingangsdateneinheit und den maskierten Schlüssel sowie eine der zwei Listen von Zufallsgrößen und den entsprechenden maskierten nichtlinearen Substitutionsoperator verwendet, eine zweite Ausführung (34) des Algorithmus, die die maskierte Eingangsdateneinheit und den maskierten Schlüssel sowie die andere Liste von Zufallsgrößen und den anderen maskierten nichtlinearen Substitutionsoperator verwendet, und den Schritt der Verifikation (36) der Kohärenz, der beispielsweise an zwei Dateneinheiten erfolgt, die aus den an den zwei Ausführungen beteiligten Daten entnommen werden, wobei diese Daten Daten sein können, die entweder durch das erste Bit maskiert oder durch das erste Bit demaskiert (35) worden sind.

**5.** Verfahren nach Anspruch 4, wobei die Wahl der einen oder der anderen der zwei Listen und des entsprechenden maskierten Substitutionsoperators in den zwei Ausführungen von dem Wert eines zweiten Bit (b2), das zufällig gezogen wird, abhängt.

**6.** Elektronische Komponente, **dadurch gekennzeichnet, dass** sie Mittel (MT) umfasst, die dafür ausgelegt sind, das kryptographische Berechnungsverfahren nach einem der vorhergehenden Ansprüche auszuführen.

**7.** Chipkarte, die eine Komponente (CMP) nach Anspruch 6 enthält.

**8.** Computerprogrammprodukt, das direkt in einen Speicher eines Datenverarbeitungssystems geladen werden kann und Software-Codeabschnitte für die Ausführung des Verfahrens nach einem der Ansprüche 1 bis 5, wenn das Programm in dem Datenverarbeitungssystem abgearbeitet wird, enthält.

**9.** Träger, der durch ein Datenverarbeitungssystem gelesen werden kann und Anweisungen besitzt, die von einem Computer abgearbeitet werden können und dafür ausgelegt sind, die Abarbeitung des Verfahrens nach einem der Ansprüche 1 bis 5 durch das Datenverarbeitungssystem hervorzurufen.

**Claims**

**1.** Method of secure cryptographic calculation, comprising a formulation (20) of a first list of first random quantities, a formulation (21) of a first non-linear substitution operator masked with the aid of a part at least of the said first list, a formulation (22) of a second list deduced from the said first list and comprising second random quantities respectively deduced from the said first random quantities, a formulation (23) of a second non-linear substitution operator masked with the aid of a part at least of the said second list, at least two successive implementations of a cryptographic calculation algorithm comprising N rounds of calculation carried out successively to obtain an output datum on the basis of an input datum and of a secret key, the data path of the algorithm being masked, one of the two implementations (24) comprising a masking of the data path of the algorithm involving the first list of first random quantities and the said first masked non-linear substitution operator, the other implementation (25) comprising a masking of the data path of the algorithm involving the second list of second random quantities and the said second masked non-linear substitution operator, and after the two implementations of the algorithm, a verification (26) of consistency between the two implementations or executions.

**2.** Method according to Claim 1, in which the verification (26) of the said consistency comprises a verification of equality between two data taken from among the data involved in the two implementations.

**3.** Method according to Claim 1 or 2, in which the second random quantities are obtained by 1-complementing the first random quantities.

**4.** Method according to one of the preceding claims, furthermore comprising a random drawing (30) of at least one first bit (b1), an initial masking (31) of the input datum with the aid of the said first bit so as to obtain a masked input datum, a masking (32) of the key with the aid of the said first bit so as to obtain a masked key, a first implementation of the algorithm (33) involving the said masked input datum and the said masked key as well as one of the two lists of random quantities and the corresponding masked non-linear substitution operator, a second implementation of the algorithm (34) involving the said masked input datum and the said masked key as well as the other list of random quantities and the other masked non-linear substitution operator, and the said consistency verification step (36) performed for example on two data taken from among the data involved in the two implementations, these data possibly being data masked by the said first bit or else demasked (35) by the said first bit.

5. Method according to Claim 4, in which the choice of one or the other of the two lists and of the corresponding masked substitution operator in the two implementations depends on the value of a second randomly drawn bit (b2).

6. Electronic component, **characterized in that** it comprises means (MT) adapted for implementing the cryptographic calculation method according to one of the preceding claims.

7. Chip card, incorporating a component (CMP) according to Claim 6.

8. Computer program product directly loadable into a memory of a computerized system, comprising portions of software code for the execution of the method according to one of Claims 1 to 5, when the said program is executed on the said computerized system.

9. Medium readable by a computerized system, having computer-executable instructions adapted to cause the execution by the computerized system of the method according to one of Claims 1 to 5.

# FIG.1

ronde i

Zone 1

Zone 2

Zone 1

L
X2

R
X2

E

E(X2)

$+$ ◀── X1

E(X2) XOR X1

$+$ ◀── E(X2)

X1

$+$ ◀── Clé de ronde Ki

X1

SBOX2 (X1, X2)

X2

P

P(X2)

$+$

P(X2) XOR X2

$+$ ◀── P(X2)

X2

L

R

# FIG.2

```
┌─────────────┐                    ┌─────────────┐
│ Elaboration │                    │ Elaboration │
20 ─│  quantité   │                    │  quantité   │─ 22
│ aléatoire R │                    │ aléatoire Rᶜ│
└─────────────┘                    └─────────────┘
      │                                  │
      ▼                                  ▼
┌─────────────┐                    ┌─────────────┐
│Elaboration de│                   │Elaboration de│
21 ─│   SBOX_R    │                   │  SBOX_Rᶜ    │─ 23
└─────────────┘                    └─────────────┘
      │                                  │
      ▼                                  ▼
┌─────────────┐                    ┌─────────────┐
│Mise en oeuvre│                   │Mise en oeuvre│
24 ─│   DES_R     │                   │   DES_Rᶜ    │─ 25
└─────────────┘                    └─────────────┘
      │              ┌─────────────┐      │
      └─────────────▶│ Vérification│◀─────┘
                     └─────────────┘
                            │
                           26
```

# FIG.3

# FIG.4

### Calcul de M ^ 0x00

40

A ———→ [ T ]

41

T^M ———→ [ T ]

42

T^A ———→ [ T ]

### Calcul de M ^ 0xFF

400

A ———→ [ T ]

401

T^M ———→ [ T ]

402

T^A' ———→ [ T ]

# FIG.5

CMP       CP

[ MT ]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1051205
- FR 0957783
- FR 0853198

- EP 1358732 A

**Littérature non-brevet citée dans la description**

- DATA ENCRYPTION STANDARD (DES), FIPS PUB 46-3, FEDERAL INFORMATION PROCESSING STANDARDS PUBLICATION. U.S. DEPARTMENT OF COMMERCE/National Institute of Standards and Technology, 25 Octobre 1999

- **SHAMIR ; BIHAM.** *Differential Fault Analysis of Secret Key Cryptosystems,* 1997, vol. 1294, 513-525
- **KAMAL et al.** An FPGA Implementation of AES with Fault Analysis Countermeasures. *International Conférence on Microelectronics (ICM),* 19 Décembre 2009, 217-220